(19) Europäisches Patentamt
European Patent Office
Office européen des brevets

(11) **EP 4 205 847 A1**

(12) **EUROPEAN PATENT APPLICATION**
published in accordance with Art. 153(4) EPC

(43) Date of publication:
**05.07.2023 Bulletin 2023/27**

(51) International Patent Classification (IPC):
**B01J 35/02** (2006.01)   **C01B 3/04** (2006.01)
**B01J 23/68** (2006.01)

(21) Application number: **21861704.1**

(52) Cooperative Patent Classification (CPC):
**B01J 23/68; B01J 35/02; C01B 3/04;** Y02E 60/36

(22) Date of filing: **27.08.2021**

(86) International application number:
**PCT/JP2021/031469**

(87) International publication number:
**WO 2022/045283 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020   JP 2020146343**

(71) Applicant: **Kao Corporation**
**Chuo-ku**
**Tokyo 103-8210 (JP)**

(72) Inventors:
• **MIYASATO,Ryo**
**Wakayama-shi, Wakayama 640-8580 (JP)**
• **TOJO,Takuto**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

Remarks:
The complete document including Reference Table(s) and the Sequence Listing(s) can be downloaded from the EPO website

(54) **JUNCTION PHOTOCATALYST, PHOTOCATALYST COMPOSITE, METHOD FOR PRODUCING JUNCTION PHOTOCATALYST, AND METHOD FOR PRODUCING HYDROGEN**

(57)    The present invention provides a heterojunction photocatalyst having higher photocatalytic activity than that of a conventional heterojunction photocatalyst. Further, the present invention provides a photocatalyst composite having the heterojunction photocatalyst on a substrate, a method for producing the heterojunction photocatalyst, and a method for producing hydrogen using the heterojunction photocatalyst or the photocatalyst composite. The heterojunction photocatalyst of the present invention has a solid mediator between a hydrogen-evolution photocatalyst and an oxygen-evolution photocatalyst, and the solid mediator is selectively joined to an electrons collecting surface of the oxygen-evolution photocatalyst.

Fig.1

EP 4 205 847 A1

**Description**

TECHNICAL FIELD

The present invention relates to a heterojunction photocatalyst having a solid mediator between a hydrogen-evolution photocatalyst and an oxygen-evolution photocatalyst, a photocatalyst composite having the heterojunction photocatalyst on a substrate, a method for producing the heterojunction photocatalyst, and a method for producing hydrogen using the heterojunction photocatalyst or the photocatalyst composite.

BACKGROUND ART

In recent years, a technique for producing hydrogen and oxygen by water splitting using a photocatalyst and sunlight has attracted attention. When water splitting is occurred by a photocatalyst, it is preferable to use a photocatalyst that catalyzes both a reduction of water (reduction of protons) and an oxidation of water. However, the type of such a photocatalyst is limited, and water splitting activity tends to be low.

Therefore, a method for efficient water splitting by using a photocatalyst (hydrogen-evolution photocatalyst) that catalyzes a reduction of water and a photocatalyst (oxygen-evolution photocatalyst) that catalyzes an oxidation of water in combination has been studied.

For example, a water-splitting system by using a combination of a hydrogen-evolution photocatalyst and an oxygen-evolution photocatalyst is called a Z-scheme system. In the Z-scheme, for example, a photocatalyst obtained by combining an oxygen-evolution photocatalyst that splits water with visible light to generate oxygen, a hydrogen-evolution photocatalyst that splits water with visible light to generate hydrogen, and a reduction-oxidation mediator is used. The Z-scheme using this photocatalyst enables overall water-splitting (hydrogen : oxygen = 2 : 1 (stoichiometric ratio)) by repeating a cycle in which electrons that are generated in the oxygen-evolution photocatalyst and do not contribute to reduction of water, reduce the reduction-oxidation mediator, and the reduced reduction-oxidation mediator is oxidized by holes that are generated in the hydrogen-evolution photocatalyst and do not contribute to oxidation of water, and returns to the reduction-oxidation mediator before being reduced.

However, in order to cause the Z-scheme using the hydrogen-evolution photocatalyst and the oxygen-evolution photocatalyst to catalytically function, a reduction-oxidation mediator (for example, $Fe^{3+}/Fe^{2+}$ or $I^-/IO_3^-$) is required, and there are problems that the reduction-oxidation mediator has low quantum efficiency and consequently low water-splitting activity. In addition, it is necessary to select an appropriate photocatalyst with respect to the reduction-oxidation potential of the reduction-oxidation mediator, which reduces the variety of photocatalysts that can be selected.

On the other hand, as a heterojunction photocatalyst that does not include a reduction-oxidation mediator, for example, Patent Document 1 proposes a photocatalyst layer including: first photocatalyst particles that are visible light-responsive for hydrogen generation; second photocatalyst particles that are visible light-responsive for oxygen generation; and conductive particles that are provided between the first photocatalyst particles and the second photocatalyst particles, have a Fermi level at a position more negative than an electron energy level at an upper end of a valence band of the first photocatalyst particles, and have a Fermi level at a position more positive than an electron energy level at a lower end of a conduction band of the second photocatalyst particles, and are capable of storing electrons and holes, in which the conductive particles are disposed so as to be connected to the first photocatalyst particles and the second photocatalyst particles.

In addition, Non-Patent Document 1 proposes a Z-scheme photocatalyst having a hierarchical structure including $ZnRh_2O_4/Au/BiVO_4$.

PRIOR ART DOCUMENT

PATENT DOCUMENT

Patent Document 1: JP-A-2017-124394

NON-PATENT DOCUMENT

Non-Patent Document 1: Toshihiro Takashima et al., J. Mater. Chem. A, 2019, 7, 10372-10378

SUMMARY OF THE INVENTION

PROBLEMS TO BE SOLVED BY THE INVENTION

A heterojunction photocatalyst in which a hydrogen-evolution photocatalyst and an oxygen-evolution photocatalyst are joined via a metal or a metal oxide has a very simple configuration, and exhibits high photocatalytic activity in a water-splitting reaction or the like under visible light irradiation, but is required to have improved photocatalytic activity.

The present invention has been made in view of the above circumstances, and provides a heterojunction photocatalyst having higher photocatalytic activity than that of a conventional heterojunction photocatalyst. Further, the present invention provides a photocatalyst composite having the heterojunction photocatalyst on a substrate, a method for producing the heterojunction photocatalyst, and a method for producing hydrogen using the heterojunction photocatalyst or the photocatalyst composite.

MEANS FOR SOLVING THE PROBLEMS

As a result of an earnest study, the inventors of the present invention have found that the problems can be solved by the following heterojunction photocatalyst.

That is, the present invention provides a heterojunction photocatalyst having a solid mediator between a hydrogen-evolution photocatalyst and an oxygen-evolution photocatalyst, wherein the solid mediator is selectively joined to an electrons collecting surface of the oxygen-evolution photocatalyst.

EFFECT OF THE INVENTION

The heterojunction photocatalyst of the present invention is characterized in that the solid mediator is selectively joined to the electrons collecting surface of the oxygen-evolution photocatalyst. The present inventors have found that excited electrons that are generated in the oxygen-evolution photocatalyst and do not contribute to reduction of water or the like can be efficiently transferred to the solid mediator by an oxygen-evolution photocatalyst having a specific crystal facet in which excited electrons are likely to gather, and by selectively joining the solid mediator to a crystal facet in which excited electrons are most likely to gather. Accordingly, the present inventors have found that in the solid mediator, a charge recombination reaction between the excited electrons and holes that are generated in the hydrogen-evolution photocatalyst and do not contribute to oxidation of water or the like can be promoted, and as a result, photocatalytic activity is improved. When the heterojunction photocatalyst of the present invention is used, water splitting into oxygen and hydrogen can be performed with high quantum efficiency.

BRIEF DESCRIPTION OF THE DRAWINGS

Fig. 1 is an SEM image of Ag-BiVO$_4$.
Fig. 2 is an SDS-PAGE image of a TiBP-DPS-AgBP protein solution.
Fig. 3 is an SEM image of TiO$_2$-Ag-BiVO$_4$.

MODE FOR CARRYING OUT THE INVENTION

Hereinafter, the present invention will be described in detail.

<Heterojunction photocatalyst>

The heterojunction photocatalyst of the present invention has a solid mediator between a hydrogen-evolution photocatalyst and an oxygen-evolution photocatalyst, and the solid mediator is selectively joined to an electrons collecting surface of the oxygen-evolution photocatalyst.

Specifically, the oxygen-evolution photocatalyst is directly or indirectly joined to a part of the solid mediator, the hydrogen-evolution photocatalyst is directly or indirectly joined to another part of the solid mediator, and the hydrogen-evolution photocatalyst and the oxygen-evolution photocatalyst are joined with at least the solid mediator interposed therebetween.

In the present invention, the term "join" means a state in which the oxygen-evolution photocatalyst and the hydrogen-evolution photocatalyst are integrated to such an extent that the oxygen-evolution photocatalyst and the hydrogen-evolution photocatalyst are not separated when a photocatalytic reaction is performed. In the present invention, the term "electrons collecting surface" means an exposed crystal surface on which excited electrons are most likely to gather in various structures of the oxygen-evolution photocatalyst.

The hydrogen-evolution photocatalyst is not particularly limited, and examples thereof include metal oxides such as $TiO_2$, $SrTiO_3$, $La_2Ti_2O_7$, $SnNb_2O_6$, and compounds in which these metal oxides are doped with one or more metals such as Cr, Sb, Ta, Rh, Ir, and La; metal oxynitrides or metal nitrides such as $LaTiO_2N$, $BaTaO_2N$, $BaNbO_2N$, TaON, $Ta_3N_5$, and $Ge_3N_4$; metal sulfides, metal selenides or metal sulfuric selenides such as $CuGaS_2$, $CuInS_2$, Cu(Ga, In) $S_2$, $CuGaSe_2$, $CuInSe_2$, Cu(Ga, In) $Se_2$, $Cu_2ZnSnS_4$ (CZTS), and $Cu_2ZnSn(S, Se)_4$; metal oxysulfides or metal oxyselenides such as $La_5Ti_2CuS_5O_7$, $La_5Ti_2AgS_5O_7$, $La_5Ti_2CuSe_5O_7$, and $La_5Ti_2AgSe_5O_7$; and the like. These may be used singly or in combination of two or more types thereof. Among them, from the viewpoint of enhancing the photocatalytic activity, one or two or more selected from metal oxides, more preferably one or two or more selected from oxides of transition metals, still more preferably one or two or more selected from oxides of elements belonging to the Group 4 of the periodic table, and still even more preferably $TiO_2$.

The oxygen-evolution photocatalyst is not particularly limited, and examples thereof include metal oxides such as $BiVO_4$, $TiO_2$, $WO_3$, $SrTiO_2$, $Ag_3PO_4$, $SnNb_2O_6$, $Bi_2WO_6$, $Fe_2TiO_5$, $Fe_2O_3$, $Bi_2MoO_6$, and compounds in which these metal oxides are doped with one or more metals such as Cr, Ni, Sb, Nb, Th, Mo, and W; metal nitrides such as $Ta_3N_5$ and $Ge_3N_4$; metal oxynitrides such as $LaTiO_2N$, $BaTaO_2N$, $BaNbO_2N$, and TaON; and the like. These may be used singly or in combination of two or more types thereof. Among them, from the viewpoint of enhancing the photocatalytic activity, the oxygen-evolution photocatalyst is preferably one or two or more selected from metal oxides, more preferably one or two or more selected from oxides of transition metals, still more preferably one or two or more selected from oxides of one or two or more elements selected from elements belonging to the Groups 4 and 5 of the periodic table, and still even more preferably $BiVO_4$.

The solid mediator is a material capable of storing excited electrons that are generated in the oxygen-evolution photocatalyst and do not contribute to reduction of water or the like and holes that are generated in the hydrogen-evolution photocatalyst and do not contribute to oxidation of water or the like, and capable of causing a charge recombination reaction between the excited electrons and the holes.

Examples of the solid mediator include transition metals such as gold, silver, copper, nickel, titanium, manganese, rhodium, palladium, ruthenium, and iridium; transition metal compounds such as oxides, nitrides, and carbides of these transition metals; doped metal oxides such as tin-doped indium oxide (ITO), metal (B, Al, Ga)-doped zinc oxide, fluorine-doped tin oxide, and antimony-doped tin oxide; and the like. These may be used singly or in combination of two or more types thereof. Among them, from the viewpoint of enhancing the photocatalytic activity, the solid mediator is preferably one or two or more selected from transition metal compounds, more preferably one or two or more selected from compounds containing an element belonging to the Group 11 of the periodic table, still more preferably one or two or more selected from silver compounds, and still even more preferably silver oxides.

In the heterojunction photocatalyst, the heterojunction selectivity (a) of the solid mediator to the electrons collecting surface of the oxygen-evolution photocatalyst, which is calculated by the following formula, is preferably 60% or more, more preferably 65% or more, still more preferably 68% or more, and still even more preferably 70% or more from the viewpoint of enhancing the photocatalytic activity.

heterojunction selectivity (a) (%) of solid mediator = {(average value of abundance ratio of solid mediator joined to electrons collecting surface of oxygen-evolution photocatalyst) $\times$ 100}/{(average value of abundance ratio of solid mediator joined to electrons collecting surface of oxygen-evolution photocatalyst) + (average value of abundance ratio of solid mediator joined to each surface other than electrons collecting surface of oxygen-evolution photocatalyst)}.

In the above formula, the abundance ratio of the solid mediator joined to the electrons collecting surface of the oxygen-evolution photocatalyst and the abundance ratio of the solid mediator joined to each surface other than the electrons collecting surface of the oxygen-evolution photocatalyst are calculated by the mole ratio (atomic ratio, mole of elements contained in the solid mediator/(mole of elements contained in the solid mediator and oxygen-evolution photocatalyst)) measured by elemental analysis in SEM (scanning electron microscope)-EDX area measurement. The average value of the abundance ratio of the solid mediator joined to each surface other than the electrons collecting surface of the oxygen-evolution photocatalyst is the average value on all surfaces other than the electrons collecting surface.

The electrons collecting surface of the oxygen-evolution photocatalyst depends on the composition of the material and the crystal system. Examples of the method for specifying the electrons collecting surface include a method in which a solution of a precursor of metal such as Pt, Au, or Ag is brought into contact with semiconductor crystal particles as a material of the oxygen-evolution photocatalyst to cause the semiconductor crystal particles to support metal particles precipitated by a photoprecipitation method, and a crystal facet on which the metal particles are precipitated is confirmed with SEM (scanning electron microscope) or TEM (transmission electron microscope). The identification of the crystal facet on which the metal particles are precipitated can be performed, for example, by specifying a lattice spacing attributed from lattice fringes observed by TEM.

The electrons collecting surface of the oxygen-evolution photocatalyst is, for example, the {010} plane or the {040} plane in the case of BiVO$_4$ (monoclinic scheelite crystal), the {110} plane in the case of TiO$_2$ (rutile crystal), the {101} plane in the case of TiO$_2$ (anatase crystal), the {002} plane in the case of WO$_3$ (monoclinic crystal), the {110} plane in the case of SrTiO$_3$ (perovskite crystal), and the {110} plane in the case of Ag$_3$PO$_4$ (cubic crystal).

In the heterojunction photocatalyst, the hydrogen-evolution photocatalyst is preferably selectively joined to the solid mediator.

In addition, in the heterojunction photocatalyst, the heterojunction selectivity (b) of the hydrogen-evolution photocatalyst to the solid mediator, which is calculated by the following formula, is preferably 60% or more, more preferably 65% or more, and still more preferably 70% or more from the viewpoint of enhancing the photocatalytic activity.

```
heterojunction selectivity (b) (%) of hydrogen-

evolution photocatalyst = {(average value of abundance

ratio of hydrogen-evolution photocatalyst joined to solid

mediator joined to electrons collecting surface of oxygen-evolution photocatalyst) × 100}/{(average value of

abundance ratio of hydrogen-evolution photocatalyst joined

to solid mediator joined to each surface of oxygen-

evolution photocatalyst) + (average value of abundance

ratio of hydrogen-evolution photocatalyst joined to each

surface of oxygen-evolution photocatalyst and not joined to

solid mediator)}.
```

In addition, in the heterojunction photocatalyst, the value of {the heterojunction selectivity (a) (%) of the solid mediator × the heterojunction selectivity (b) (%) of the hydrogen-evolution photocatalyst}/10,000 is preferably 0.3 or more, more preferably 0.36 or more, still more preferably 0.4 or more, and still even more preferably 0.5 or more, and preferably 1 or less from the viewpoint of enhancing the photocatalytic activity.

In the above formula, the abundance ratio of the hydrogen-evolution photocatalyst joined to the solid mediator joined to the electrons collecting surface of the oxygen-evolution photocatalyst, the abundance ratio of the hydrogen-evolution photocatalyst joined to the solid mediator joined to each surface of the oxygen-evolution photocatalyst, and the abundance ratio of the hydrogen-evolution photocatalyst joined to each surface of the oxygen-evolution photocatalyst and not joined to the solid mediator are calculated by the mole ratio (atomic ratio) measured from elemental analysis of SEM (scanning electron microscope)-EDX point measurement. Specifically, the abundance ratio of the hydrogen-evolution photocatalyst joined to the solid mediator joined to each surface (including the electrons collecting surface) of the oxygen-evolution photocatalyst is calculated from the mole of the elements contained in the hydrogen-evolution photocatalyst/(mole of the elements contained in the hydrogen-evolution photocatalyst, the oxygen-evolution photocatalyst, and the solid mediator). Further, the abundance ratio of the hydrogen-evolution photocatalyst joined to each surface (including the electrons collecting surface) of the oxygen-evolution photocatalyst and not joined to the solid mediator is calculated from the mole of the elements contained in the hydrogen-evolution photocatalyst/(mole of the elements contained in the hydrogen-evolution photocatalyst and the oxygen-evolution photocatalyst). The average value of the abundance ratio of the hydrogen-evolution photocatalyst joined to the solid mediator joined to each surface of the oxygen-evolution photocatalyst is the average value on all surfaces including the electrons collecting surface. The abundance ratio of the hydrogen-evolution photocatalyst joined to each surface of the oxygen-evolution photocatalyst and not joined to the solid mediator is the average value on all surfaces including the electrons collecting surface.

In the heterojunction photocatalyst, the atomic ratio of the metal contained in the solid mediator to the metal contained in the oxygen-evolution photocatalyst is preferably 1/99 or more, more preferably 3/95 or more, still more preferably 5/95 or more, still even more preferably 7/93 or more from the viewpoint of enhancing the photocatalytic activity, and is preferably 30/70 or less, more preferably 20/80 or less, still more preferably 15/85 or less, still even more preferably 10/90 or less from the same viewpoint.

In the heterojunction photocatalyst, the atomic ratio of the metal contained in the hydrogen-evolution photocatalyst to the metal contained in the oxygen-evolution photocatalyst is preferably 0.1/99.9 or more, more preferably 0.5/99.5 or more, still more preferably 1/99 or more from the viewpoint of enhancing the photocatalytic activity, and is preferably 10/90 or less, more preferably 5/95 or less, still more preferably 2/98 or less, still even more preferably 1.5/98.5 or less from the same viewpoint.

In the heterojunction photocatalyst, the atomic ratio of the metal contained in the hydrogen-evolution photocatalyst to the metal contained in the solid mediator is preferably 1/90 or more, more preferably 5/95 or more, still more preferably 8/92 or more, still even more preferably 10/90 or more from the viewpoint of enhancing the photocatalytic activity, and is preferably 40/60 or less, more preferably 30/70 or less, still more preferably 20/80 or less, still even more preferably 15/85 or less from the same viewpoint.

The atomic ratio of the metal contained in the hydrogen-evolution photocatalyst on the electrons collecting surface of the oxygen-evolution photocatalyst to the metal contained in the solid mediator on the electrons collecting surface of the oxygen-evolution photocatalyst is preferably 1/90 or more, more preferably 10/90 or more, still more preferably 15/85 or more, still even more preferably 20/80 or more from the viewpoint of enhancing the photocatalytic activity, and is preferably 50/50 or less, more preferably 40/60 or less, still more preferably 30/70 or less, still even more preferably 25/75 or less from the same viewpoint. The hydrogen-evolution photocatalyst on the electrons collecting surface of the oxygen-evolution photocatalyst means both a hydrogen-evolution photocatalyst joined to the electrons collecting surface of the oxygen-evolution photocatalyst and a hydrogen-evolution photocatalyst joined to the electrons collecting surface of the oxygen-evolution photocatalyst via the solid mediator.

The solid mediator and the hydrogen-evolution photocatalyst are preferably joined via a protein having a peptide aptamer, and more preferably joined via a protein having at least a peptide aptamer having high adsorption performance for the solid mediator and a peptide aptamer having high adsorption performance for the hydrogen-evolution photocatalyst. Use of the protein enhances the heterojunction selectivity of the hydrogen-evolution photocatalyst to the solid mediator.

The hydrogen-evolution photocatalyst and the oxygen-evolution photocatalyst preferably have a co-catalyst on a surface thereof. As a result, the reduction and oxidation of water or the like are promoted, and the quantum efficiencies of hydrogen and oxygen evolution are improved.

Examples of the co-catalyst of the hydrogen-evolution photocatalyst include transition metals such as Pt, Pd, Ru, Ni, Au, Fe, Ir, and Rh; metal oxides such as NiO, $RuO_2$, $IrO_2$, and $Rh_2O_3$; metal sulfides such as NiS and $MoS_2$; Cr-Rh composite oxide; and the like. These may be used singly or in combination of two or more types thereof. Among them, from the viewpoint of hydrogen evolution efficiency, the co-catalyst is preferably one or two or more selected from transition metals, more preferably one or two or more selected from metals belonging to the Group 10 of the periodic table, and still more preferably Pt.

Examples of the co-catalyst of the oxygen-evolution photocatalyst include transition metals such as Mn, Fe, Co, Ir, Ru, Rh, Ni, Sb, Nb, Th, and Cr; oxides and hydroxides of these transition metals; and the like. These may be used singly or in combination of two or more types thereof. Among them, one or two or more selected from oxides of transition metals are preferable from the viewpoint of oxygen evolution efficiency.

<Method for producing heterojunction photocatalyst>

The method for producing a heterojunction photocatalyst of the present invention is, for example, a method in which the solid mediator is joined to the surface of the oxygen-evolution photocatalyst, and then the hydrogen-evolution photocatalyst is joined to the surface of the solid mediator.

The method for joining (supporting) the solid mediator to the surface of the oxygen-evolution photocatalyst is not particularly limited, and examples thereof include a photoelectrodeposition method, an impregnation supporting method, a precipitation method, and the like.

The photoelectrodeposition method is a method in which a solution containing a photocatalyst and a metal salt (a precursor of a solid mediator) is irradiated with light to reduce the metal salt and precipitate metal particles or metal compound particles (solid mediator), thereby causing the particles to be supported on the surface of the photocatalyst.

The impregnation supporting method is a method in which a photocatalyst is added to a solution in which a metal salt (a precursor of a solid mediator) is dissolved, then the solvent is removed by solid-liquid separation through filtration, decantation, or centrifugation, heating, or distillation of the solvent under reduced pressure, or the like, thereby causing the metal salt to be supported on the surface of the photocatalyst, and then the metal salt is fired or reduced to cause metal particles or metal compound particles (solid mediator) to be supported on the surface of the photocatalyst.

The precipitation method is a method in which a metal salt (a precursor of a solid mediator) is reduced in a solution to generate metal particles or metal compound particles (solid mediator), and then a photocatalyst is added to the obtained dispersion and the mixture is stirred to cause the metal particles or the metal compound particles (solid mediator) to be supported on the surface of the photocatalyst.

Examples of the method for setting the heterojunction selectivity of the solid mediator to the electrons collecting surface of the oxygen-evolution photocatalyst to 60% or more include a method of adjusting the pH of a solution when the solid mediator is joined (supported) to the surface of the oxygen-evolution photocatalyst, a method of adjusting the irradiation light intensity, and the like. The pH of the solution is preferably 4 or more, more preferably 5 or more, still more preferably 5.5 or more, and preferably 8 or less, more preferably 7 or less, still more preferably 6.5 or less from the viewpoint of increasing the heterojunction selectivity of the solid mediator to the electrons collecting surface of the oxygen-evolution photocatalyst. The irradiation light intensity is preferably 0.1 mW/cm$^2$ or more, more preferably 0.5 mW/cm$^2$ or more, still more preferably 0.8 mW/cm$^2$ or more, and is preferably 10 mW/cm$^2$ or less, more preferably 5 mW/cm$^2$ or less, still more preferably 2 mW/cm$^2$ or less from the viewpoint of increasing the heterojunction selectivity of the solid mediator to the electrons collecting surface of the oxygen-evolution photocatalyst.

The method for joining (supporting) the hydrogen-evolution photocatalyst to the surface of the solid mediator is not particularly limited. Examples of the method include (1) a method in which the oxygen-evolution photocatalyst supporting the solid mediator and the hydrogen-evolution photocatalyst are mixed to obtain a dispersion, and then a solid content is separated and recovered from the dispersion, (2) a method in which the oxygen-evolution photocatalyst supporting the solid mediator and a precursor of the hydrogen-evolution photocatalyst are mixed to obtain a dispersion, and then the hydrogen-evolution photocatalyst is joined (supported) to the surface of the solid mediator by a sol-gel method, and the like.

In order to increase the heterojunction selectivity of the hydrogen-evolution photocatalyst to the solid mediator, it is preferable to add a protein having a peptide aptamer as a selective joining agent to the dispersion. The peptide aptamer is a peptide having a sequence having high adsorption performance for a specific compound. In the present invention, it is more preferable to use a protein having at least a peptide aptamer having high adsorption performance for the solid mediator and a peptide aptamer having high adsorption performance for the hydrogen-evolution photocatalyst in the sequence of the protein. Examples of the peptide aptamer having high adsorption performance for the solid mediator include amino acid sequences AYSSGAPPMPPF, SLATQPPRTPPV, WSWRSPTPHVVT, MHPKPTPHWLK, TMHPRHIQIYPA, and HPVQSTTKWSHI for Ag, and MHGKTQATSGTIQS, LGQSGQSLQGSEKLTNG, and EKLVRGMEGASLHPA for Au. Examples of the peptide aptamer having high adsorption performance for the hydrogen-evolution photocatalyst include amino acid sequences RKLPDAPGMHTW, QPYLFATDSLIK, GHTHYHAVRTQT, HEHPSRHHTHHR, HHHHISHSLQLV, and THHKHKPVTQFS for titanium oxide. Examples of the protein having a peptide aptamer include Dps (DNA-binding protein from starved cell), ferritin, and the like. In the case of using Dps, in order to form a 12 mer, 12 of each of two types of peptide aptamers can be introduced by introducing a peptide having an optional sequence at the C-terminal and the N-terminal.

Examples of the method for supporting the co-catalyst on the surface of the hydrogen-evolution photocatalyst or the oxygen-evolution photocatalyst include a photoelectrodeposition method, an impregnation method, an adsorption method, a hydrogen reduction method, an electroless plating method, and the like.

The impregnation method and the adsorption method are methods in which the photocatalyst is dispersed in a solution in which a co-catalyst precursor is dissolved to cause the co-catalyst precursor to adsorb on the surface of the photocatalyst. Examples of the co-catalyst precursor include transition metal chlorides, transition metal nitrates, transition metal ammine salts, and the like.

Preferably, the co-catalyst precursor is supported on the surface of the photocatalyst and then reduced. The activity of the catalyst is increased by reducing the co-catalyst precursor to a metal state. Examples of the method for reducing the co-catalyst precursor include a photoreduction method, a chemical reduction method, and the like. The photoreduction method is a method of reducing a co-catalyst precursor adsorbed to a photocatalyst by excited electrons generated in the photocatalyst by irradiating the photocatalyst with ultraviolet light or visible light. The chemical reduction method is a method in which the co-catalyst precursor is reduced under a hydrogen gas stream at about 400°C or lower, preferably 300°C or lower. The co-catalyst supported on the surface of the photocatalyst is particulate, and the amount of the co-catalyst to be supported may be appropriately adjusted.

<Photocatalyst composite>

The photocatalyst composite of the present invention has the heterojunction photocatalyst on a substrate.

The substrate is not particularly limited as long as the heterojunction photocatalyst can be immobilized on the surface of the substrate. Examples of the substrate include a ceramic substrate such as alumina; a glass substrate such as soda lime glass or borosilicate glass; a quartz substrate; a metal substrate such as titanium, copper, tin, iron, aluminum, or stainless steel; an organic substrate such as methacrylic resin, acrylic resin, urethane resin, phenol resin, melamine resin, urea resin, polyester resin, polycarbonate resin, fluororesin, polyethylene, polypropylene, polystyrene, polyamide, polyimide, polyacetal, polyvinyl chloride, or polyvinylidene chloride; a fiber substrate such as glass fiber or carbon fiber;

a natural substrate such as paper, bamboo, or wood; and the like.

The substrate preferably has pores, and more preferably has continuous pores. With such a configuration, hydrogen gas generated by a water splitting reaction on the surface of the heterojunction photocatalyst can reach the outside through the pores, and hydrogen gas can be more efficiently produced.

The method for producing the photocatalyst composite is not particularly limited, and examples thereof include (1) a method in which a dispersion containing the heterojunction photocatalyst is applied onto a substrate, dried, and fired as necessary to immobilize the heterojunction photocatalyst on the substrate, (2) a method in which a dispersion containing the oxygen-evolution photocatalyst is applied onto a substrate, dried, and fired as necessary to immobilize the oxygen-evolution photocatalyst on the substrate, then the solid mediator is joined to the surface of the oxygen-evolution photocatalyst by the same method as described above, and then the hydrogen-evolution photocatalyst is joined to the surface of the solid mediator, and the like.

<Applications of heterojunction photocatalyst and photocatalyst composite>

The heterojunction photocatalyst and the photocatalyst composite of the present invention can be used not only as a photocatalyst that catalyzes a decomposition reaction of water or alcohol, but also as an environmental purifier, an antibacterial/bactericidal agent, a deodorant, an antifouling agent, or the like for detoxifying harmful organic compounds, bacteria, offensive odor substances, inorganic compounds (ammonium ion, ammonia, nitrate ion, nitrite ion, and the like), and the like.

<Method for producing hydrogen>

The method for producing hydrogen using the heterojunction photocatalyst or the photocatalyst composite of the present invention is not particularly limited. The method includes, for example, a step of irradiating the heterojunction photocatalyst or the photocatalyst composite with light in the presence of water or alcohol to cause a decomposition reaction of water or alcohol, thereby generating at least hydrogen.

The light to be emitted may be either sunlight or artificial light (fluorescent lamp, UV lamp, LED, mercury lamp, xenon lamp, metal halide lamp, sodium lamp, halogen lamp, and the like). The wavelength of light is preferably 180 to 1,000 nm, and more preferably 300 to 800 nm from the viewpoint of promoting the reduction and oxidation. The irradiance of the light irradiation is preferably 1 $\mu$W/m$^2$ or more, and more preferably 1 mW/m$^2$ or more from the viewpoint of promoting the reduction and oxidation. The reaction temperature is preferably 0°C or higher, and more preferably 15°C or higher from the viewpoint of promoting the reduction and oxidation.

With regard to the above-described embodiments, the present invention further discloses the following heterojunction photocatalyst, photocatalyst composite, method for producing a heterojunction photocatalyst, use of a heterojunction photocatalyst, use of a photocatalyst composite, and method for producing hydrogen.

<1> A heterojunction photocatalyst comprising a solid mediator between a hydrogen-evolution photocatalyst and an oxygen-evolution photocatalyst, wherein the solid mediator is selectively joined to an electrons collecting surface of the oxygen-evolution photocatalyst.

<2> The heterojunction photocatalyst according to <1>, wherein the hydrogen-evolution photocatalyst is selectively joined to the solid mediator.

<3> The heterojunction photocatalyst according to <1> or <2>, wherein a heterojunction selectivity (a) of the solid mediator to the electrons collecting surface of the oxygen-evolution photocatalyst, calculated by a following formula, is preferably 60% or more, more preferably 65% or more, still more preferably 68% or more, and still even more preferably 70% or more.

heterojunction selectivity (a) (%) of solid mediator = {(average value of abundance ratio of solid mediator joined to electrons collecting surface of oxygen-evolution photocatalyst) × 100}/{(average value of abundance ratio of solid mediator joined to electrons collecting surface of oxygen-evolution photocatalyst) + (average value of abundance ratio of solid mediator joined to each surface other than electrons collecting surface of oxygen-evolution photocatalyst)}.

<4> The heterojunction photocatalyst according to any one of <1> to <3>, wherein a heterojunction selectivity (b) of the hydrogen-evolution photocatalyst to the solid mediator, calculated by a following formula, is preferably 60% or more, more preferably 65% or more, and still more preferably 70% or more.

heterojunction selectivity (b) (%) of hydrogen-evolution photocatalyst = {(average value of abundance ratio of hydrogen-evolution photocatalyst joined to solid mediator joined to electrons collecting surface of oxygen-evolution photocatalyst) × 100}/{(average value of abundance ratio of hydrogen-evolution photocatalyst joined to solid mediator joined to each surface of oxygen-evolution photocatalyst) + (average value of abundance ratio of hydrogen-evolution photocatalyst joined to each surface of oxygen-evolution photocatalyst and not joined to solid mediator)}.

<5> The heterojunction photocatalyst according to <4>, wherein a value of {the heterojunction selectivity (a) (%) of the solid mediator × the heterojunction selectivity (b) (%) of the hydrogen-evolution photocatalyst}/10,000 is preferably 0.3 or more, more preferably 0.36 or more, still more preferably 0.4 or more, and still even more preferably 0.5 or more, and preferably 1 or less.

<6> The heterojunction photocatalyst according to any one of <1> to <5>, wherein an atomic ratio of a metal contained in the solid mediator to a metal contained in the oxygen-evolution photocatalyst is preferably 1/99 or more and 30/70 or less, more preferably 3/95 or more and 20/80 or less, still more preferably 5/95 or more and 15/85 or less, and still even more preferably 7/93 or more and 10/90 or less.

<7> The heterojunction photocatalyst according to any one of <1> to <6>, wherein the hydrogen-evolution photocatalyst is a metal oxide.

<8> The heterojunction photocatalyst according to <7>, wherein the metal oxide is one or more selected from $TiO_2$, $SrTiO_3$, $La_2Ti_2O_7$, $SnNb_2O_6$, and a compound in which $TiO_2$, $SrTiO_3$, $La_2Ti_2O_7$, or $SnNb_2O_6$ is doped with one or more metals selected from Cr, Sb, Ta, Rh, Ir, and La.

<9> The heterojunction photocatalyst according to any one of <1> to <8>, wherein the oxygen-evolution photocatalyst is a metal oxide.

<10> The heterojunction photocatalyst according to <9>, wherein the metal oxide is one or more selected from $BiVO_4$, $TiO_2$, $WO_3$, $SrTiO_3$, $Ag_3PO_4$, $SnNb_2O_6$, $Bi_2WO_6$, $Fe_2TiO_5$, $Fe_2O_3$, $Bi_2MoO_6$, and a compound in which $BiVO_4$, $TiO_2$, $WO_3$, $SrTiO_3$, $Ag_3PO_4$, $SnNb_2O_6$, $Bi_2WO_6$, $Fe_2TiO_5$, $Fe_2O_3$, or $Bi_2MoO_6$ is doped with one or more metals selected from Cr, Ni, Sb, Nb, Th, Mo, and W.

<11> The heterojunction photocatalyst according to any one of <1> to <10>, wherein the solid mediator is a transition metal compound.

<12> The heterojunction photocatalyst according to <11>, wherein the transition metal compound is one or more selected from gold, silver, copper, nickel, titanium, manganese, rhodium, palladium, ruthenium, iridium, oxides, nitrides, and carbides thereof.

<13> The heterojunction photocatalyst according to any one of <1> to <12>, wherein an atomic ratio of a metal contained in the hydrogen-evolution photocatalyst to a metal contained in the oxygen-evolution photocatalyst is preferably 0.1/99.9 or more and 10/90 or less, more preferably 0.5/99.5 or more and 5/95 or less, and still more preferably 1/99 or more and 2/98 or less.

<14> The heterojunction photocatalyst according to any one of <1> to <13>, wherein an atomic ratio of a metal contained in the hydrogen-evolution photocatalyst to a metal contained in the solid mediator is preferably 1/90 or more and 40/60 or less, more preferably 5/95 or more and 30/70 or less, still more preferably 8/92 or more and 20/80 or less, and still even more preferably 10/90 or more and 15/85 or less.

<15> The heterojunction photocatalyst according to any one of <1> to <14>, wherein an atomic ratio of a metal contained in the hydrogen-evolution photocatalyst on the electrons collecting surface of the oxygen-evolution photocatalyst to a metal contained in the solid mediator on the electrons collecting surface of the oxygen-evolution photocatalyst is preferably 1/90 or more and 50/50 or less, more preferably 10/90 or more and 40/60 or less, still more preferably 15/85 or more and 30/70 or less, and still even more preferably 20/80 or more and 25/75 or less.

<16> The heterojunction photocatalyst according to any one of <1> to <15>, wherein the heterojunction photocatalyst is used for water splitting or organic substance decomposition.

<17> The heterojunction photocatalyst according to any one of <1> to <16>, comprising a protein having a peptide aptamer as a selective joining agent between the hydrogen-evolution photocatalyst and the solid mediator.

<18> A photocatalyst composite comprising the heterojunction photocatalyst according to any one of <1> to <17> on a substrate.

<19> A method for producing the heterojunction photocatalyst according to any one of <1> to <17>, wherein a protein having a peptide aptamer is used as a selective joining agent when the hydrogen-evolution photocatalyst and the solid mediator are joined.

<20> Use of the heterojunction photocatalyst according to any one of <1> to <17> as a photocatalyst for water splitting or a photocatalyst for organic substance decomposition.

<21> Use of the heterojunction photocatalyst according to <18> as a photocatalyst for water splitting or a photocatalyst for organic substance decomposition.

<22> A method for producing hydrogen, comprising irradiating the heterojunction photocatalyst according to any one of <1> to <17> or the photocatalyst composite according to <18> with light in a presence of water or alcohol.

EXAMPLES

Hereinafter, the present invention is specifically described on the basis of examples. Unless otherwise specified, a reagent manufactured by FUJIFILM Wako Pure Chemical Corporation was used.

Example 1

<Preparation of bismuth vanadate ($BiVO_4$)>

In 50 mL of 2 mol/L nitric acid, 6.06 g of bismuth nitrate pentahydrate and 1.46 g of ammonium vanadate were dissolved. Thereafter, aqueous ammonia was added dropwise to the solution until the pH reached 2.0, and 0.12 g of sodium chloride was added to obtain a yellow-orange dispersion. The dispersion was transferred to a fluororesin container and reacted in an autoclave at 170°C for 24 hours. After the reaction, the precipitate was separated by suction filtration, washed with deionized water, and then dried under reduced pressure. The dried sample was fired in an electric furnace at 500°C for 2 hours to obtain a yellow powder of $BiVO_4$. It was confirmed by SEM (JEOL JSM-IT500HR) observation that the prepared $BiVO_4$ particles have a decahedral structure having the {010} plane as the basal plane. In addition, from powder X-ray diffraction measurement (MiniFlex II diffractometer, manufactured by Rigaku Corporation), it was confirmed that the crystal system was a monoclinic scheelite crystal.

<Preparation of Ag-BiVO$_4$>

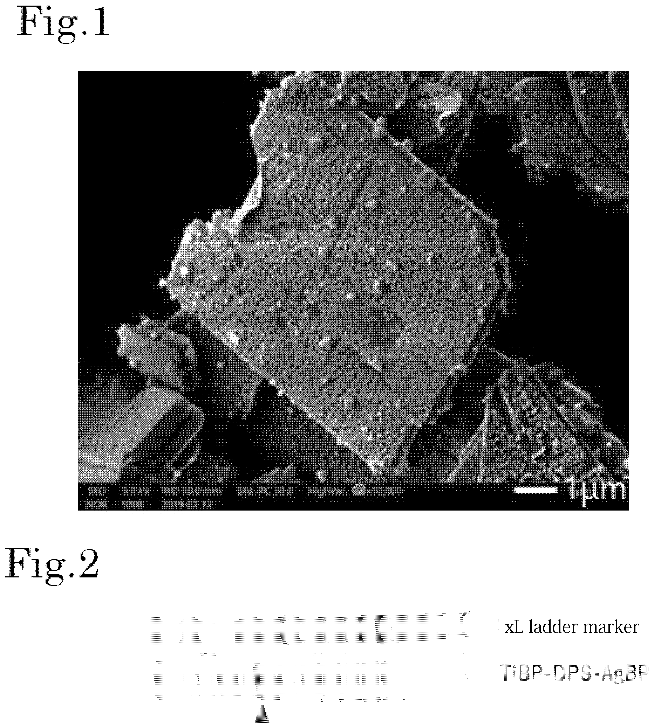

In a glass container, 200 mg of the prepared $BiVO_4$ was placed and dispersed in 50 mL of deionized water, and 0.06 g of silver nitrate and 0.64 mL of methanol were added thereto. Then, light irradiation was performed for 3 hours with a 300W xenon lamp (manufactured by CERMAX, PE300BF) while stirring with a stirring bar (light intensity: 1 mW/cm$^2$). At this time, the pH was adjusted to 6.0 while a 5 mmol/L aqueous ammonia solution was dropped by a tube pump. After completion of the reaction, the precipitate was separated by suction filtration. The obtained precipitate was washed with deionized water and then dried under reduced pressure to obtain a brown powder of Ag-BiVO$_4$. The prepared Ag-BiVO$_4$ particles were observed by SEM, and an image in which Ag particles were selectively precipitated on the {010} plane of $BiVO_4$ was obtained as shown in Fig. 1. The Ag bonding state of the surface was confirmed by XPS (PHI Quantra SXM apparatus, manufactured by ULVAC-PHI, INCORPORATED.), and found to be a divalent oxidation state.

<Preparation of protein having peptide aptamer>

(Construction of gene)

DNA (SEQ ID NO: 1) encoding a protein consisting of the amino acid sequence of SEQ ID NO: 2 (TiBP-DPS-AgBP) was synthesized using a gene artificial synthesis service of Thermo Fisher Scientific Inc. The synthesized DNA fragment was treated with In-fusion HD Cloning kit (manufactured by Clontech Laboratories, Inc.) together with pET-22b(+) Vector (manufactured by Novagen) subjected to restriction enzyme treatment with NdeII (manufactured by Takara Bio Inc.) and HindIII (manufactured by Takara Bio Inc.), and introduced into an *E. coli* DH5α competent cell (manufactured by Nippon Gene Co., Ltd.) to obtain a TiBP-DPS-AgBP in pET plasmid.

(Expression of protein by *E. coli*)

The TiBP-DPS-AgBP in pET plasmid was introduced into an *E. coli* BL21 (DE3) pLysS competent cell (manufactured by Novagen) to obtain a transformed *E. coli* expressing TiBP-DPS-AgBP. The transformed *E. coli* was cultured with shaking overnight at 30°C in a LB medium (tryptone 1% (w/v), yeast extract 0.5% (w/v), sodium chloride 1% (w/v)) containing 50 mg/L ampicillin sodium and 1% glucose. The culture medium (1%) was added to Overnight Express (trademark) Instant TB Medium (manufactured by Novagen), followed by culture with shaking at 30°C for 24 hours.
The bacterial cells were separated from the culture medium by centrifugation, and the obtained pellets were frozen in a freezer at -80°C. The pellets were melted at 4°C, and then PBS (manufactured by Nippon Gene Co., Ltd.) was added and suspended thereto. The supernatant obtained by centrifuging the suspension was heated at 60°C for 20 minutes, and further centrifuged again to obtain a supernatant. The obtained supernatant was dialyzed in a 10 mmol/L potassium phosphate buffer (pH 6.0) to obtain a TiBP-DPS-AgBP protein solution. The composition of the TiBP-DPS-AgBP protein solution was confirmed by SDS-PAGE using SuperSep (trade mark) Ace, 15 to 20%, 17 well (Tricine gel) as a polyacrylamide gel for electrophoresis, and an xL ladder marker (manufactured by APRO Science Inc.) as a ladder marker (Fig. 2).

(SEQ ID NO: 1)

AAGGAGATATACATAATGCGCAAACTGCCGGATGCGAAAACCATTAATAGCGTTGATAC

CAAAGAATTTCTGAACCATCAGGTGGCCAATCTGAATGTTTTTACCGTGAAAATCCATC

AGATCCACTGGTATATGCGTGGCCATAACTTTTTTACCCTGCACGAAAAAATGGATGAT

CTGTATAGCGAATTTGGCGAGCAGATGGATGAAGTTGCAGAACGTCTGCTGGCAATTGG

TGGTAGCCCGTTTAGCACCCTGAAAGAGTTTCTGGAAAACGCAAGCGTTGAAGAAGCAC

CGTATACCAAACCGAAACCATGGATCAACTGATGGAAGATCTGGTTGGCACCCTGGAA

CTGCTGCGTGATGAATATAAACAGGGTATTGAACTGACCGATAAAGAAGGTGACGACGT

TACCAATGATATGCTGATTGCATTTAAAGCCAGCATCGATAAACACATCTGGATGTTTA

AAGCCTTTCTGGGTAAAGCACCGCTGGAAAGCCTGGCGACCCAGCCGCCTCGCACGCCA

CCGGTGtaaAGCTTGCGGCCGCAC

(SEQ ID NO: 2)

RKLPDAKTINSVDTKEFLNHQVANLNVFTVKIHQIHWYMRGHNFFTLHEKMDDLYSEFG

EQMDEVAERLLAIGGSPFSTLKEFLENASVEEAPYTKPKTMDQLMEDLVGTLELLRDEY

KQGIELTDKEGDDVTNDMLIAFKASIDKHIWMFKAFLGKAPLESLATQPPRTPPV*

<Preparation of $TiO_2$-Ag-$BiVO_4$>

In a glass container, 30 mg of Ag-$BiVO_4$ was placed and dispersed in 10 mL of a 50 mmol/L potassium phosphate buffer (pH 6.0), 50 $\mu$L of MYDOL 10 (manufactured by Kao Corporation) and 200 $\mu$L of the prepared protein solution were added thereto, followed by mixing for 1 hour with a rotator. After mixing, the precipitate was separated by centrifugation and washed twice with a 50 mmol/L potassium phosphate buffer (pH 6.0). Then, 180 $\mu$L of a 50% solution of titanium(IV) bis(ammonium lactato)dihydroxide was added to the obtained phosphate buffer dispersion, and the mixture was incubated at 25°C for 24 hours. The precipitate was separated by centrifugation. Thereafter, an operation (washing operation) of adding deionized water to the precipitate to suspend the precipitate and separating the precipitate from the obtained suspension by centrifugation was performed twice. The obtained precipitate was dried to obtain a brown powder of $TiO_2$-Ag-$BiVO_4$ .

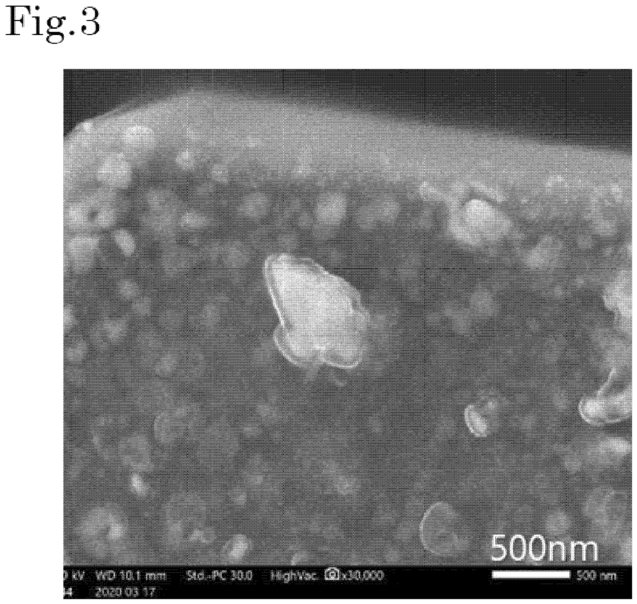

The prepared $TiO_2$-Ag-$BiVO_4$ particles were observed by SEM, and a state in which a film-like compound was precipitated around Ag particles was confirmed as shown in Fig. 3. Elemental composition analysis was performed by SEM-EDX, and a Ti compound was detected on Ag particles. The atomic ratio of the entire particle (observation magnification: 2,000 times) was Ti/Ag/Bi/V = 0.02/0.16/1.00/0.87. In addition, the atomic ratio (observation magnification: 15,000 times) calculated on the {010} plane which is the electrons collecting surface of $BiVO_4$ was Ti/Ag/Bi/V = 0.06/0.22/1.00/0.86. Each surface other than the electrons collecting surface is a crystal facet and an amorphous surface, but the electrons collecting surface is the {010} plane in which excited electrons are most likely to gather, that is, the abundance ratio of Ag particles is the highest.

Elemental composition analysis was performed by SEM-EDX area measurement on each of the {010} plane and exposed surfaces other than the {010} plane. The heterojunction selectivity of Ag particles to the {010} plane as the electrons collecting surface of $BiVO_4$ (heterojunction selectivity of solid mediator) was calculated by the following formula.

$$\text{heterojunction selectivity (a) (\%) of solid mediator}$$
$$= \{(\text{average value of abundance ratio of solid mediator}$$
$$\text{joined to electrons collecting surface of oxygen-evolution}$$
$$\text{photocatalyst}) \times 100\}/\{(\text{average value of abundance ratio of}$$
$$\text{solid mediator joined to electrons collecting surface of}$$
$$\text{oxygen-evolution photocatalyst}) + (\text{average value of}$$
$$\text{abundance ratio of solid mediator joined to each surface}$$
$$\text{other than electrons collecting surface of oxygen-evolution}$$
$$\text{photocatalyst})\}$$

Specifically, the average value of the abundance ratio of Ag particles joined to the {010} plane which is the electrons collecting surface of $BiVO_4$ is the number average value of the abundance ratio of Ag particles at 50 locations randomly selected on the {010} plane, and was 0.22 as described above.

The average value of the abundance ratio of Ag particles on each surface other than the electrons collecting surface of $BiVO_4$ is the number average value of the abundance ratio of Ag particles at 50 locations randomly selected on each surface other than the {010} plane, and was 0.079.

In addition, elemental composition analysis was performed by SEM-EDX point measurement on Ag particles and each site other than the Ag particles on each surface of the oxygen-evolution photocatalyst. The heterojunction selectivity of the Ti compound to the Ag particles joined to the electrons collecting surface of the oxygen-evolution photocatalyst (the heterojunction selectivity of the hydrogen-evolution photocatalyst) was calculated by the following formula. The results are shown in Table 1.

$$\text{heterojunction selectivity (b) (\%) of hydrogen-}$$
$$\text{evolution photocatalyst} = \{(\text{average value of abundance}$$
$$\text{ratio of hydrogen-evolution photocatalyst joined to solid}$$
$$\text{mediator joined to electrons collecting surface of oxygen-}$$
$$\text{evolution photocatalyst}) \times 100\}/\{(\text{average value of}$$
$$\text{abundance ratio of hydrogen-evolution photocatalyst joined}$$
$$\text{to solid mediator joined to each surface of oxygen-}$$
$$\text{evolution photocatalyst}) + (\text{average value of abundance}$$
$$\text{ratio of hydrogen-evolution photocatalyst joined to each}$$
$$\text{surface of oxygen-evolution photocatalyst and not joined to}$$
$$\text{solid mediator})\}$$

Specifically, the average value of the abundance ratio of the hydrogen-evolution photocatalyst joined to the solid mediator joined to the electrons collecting surface of the oxygen-evolution photocatalyst is the number average value of the abundance ratio of Ti at 50 locations randomly selected on the surface of the Ag particles joined to the {010} plane which is the electrons collecting surface of $BiVO_4$, and was 0.20.

The average value of the abundance ratio of the hydrogen-evolution photocatalyst joined to the solid mediator joined to each surface of the oxygen-evolution photocatalyst is the number average value of the abundance ratio of Ti at 50 locations randomly selected on the surface of the Ag particles on the surface of $BiVO_4$, and was 0.20.

The average value of the abundance ratio of the hydrogen-evolution photocatalyst joined to each surface of the oxygen-evolution photocatalyst and not joined to the solid mediator is the number average value of the abundance ratio of Ti which is on the surface of $BiVO_4$ and is not joined to Ag particles, at randomly selected 50 locations, and was 0.071.

<Pt-deposited on $TiO_2$-Ag-$BiVO_4$ (= heterojunction photocatalyst) and evaluation of methanol decomposition activity>

In a glass container, 30 mg of the $TiO_2$-Ag-$BiVO_4$ was placed and dispersed in 160 mL of a phosphate buffer at a pH of 6, and 0.8 mg of hexachloroplatinic acid and 20 mL of methanol were added thereto. Then, light irradiation was performed with a 300 W xenon lamp while bubbling argon gas at 20 mL/min, to cause Pt to be supported on the $TiO_2$-Ag-$BiVO_4$. Then, gas generated by light irradiation was analyzed with a gas chromatograph (GC-8A, manufactured by Shimadzu Corporation) of a TCD detector. MS-5A was used as a column, the column temperature was 70°C, the detector temperature was 100°C, and the gas pressure was 70 kPa. Hydrogen gas was detected with light irradiation. Light irradiation was continued for 4 hours, and the average hydrogen generation rate was calculated. The results are shown in Table 1.

<Evaluation of water splitting activity of Pt-deposited $TiO_2$-Ag-$BiVO_4$>

At the end of the evaluation of the methanol decomposition activity, the contents of the glass container were taken out. A precipitate was separated from the taken out contents by centrifugation. Thereafter, an operation (washing operation) of adding deionized water to the precipitate to suspend the precipitate and separating the precipitate from the obtained suspension by centrifugation was performed twice. The obtained precipitate was dried to obtain Pt-deposited $TiO_2$-Ag-$BiVO_4$. Then, 6 mg of Pt-deposited $TiO_2$-Ag-$BiVO_4$ was placed in a glass container, and 5 mL of a 50 mmol/L aqueous sulfuric acid solution at a pH of 3.5 was further added to obtain a dispersion. In the obtained dispersion, argon gas was bubbled at 10 mL/min for 10 minutes, and then light irradiation was performed with a 300 W xenon lamp. The generated gas was analyzed with a gas chromatograph of a TCD detector. Light irradiation was continued for 2.5 hours, and the average hydrogen generation rate was calculated. The results are shown in Table 1.

Example 2

$TiO_2$-Ag-$BiVO_4$ was prepared by the same operation as in Example 1 except that the pH was adjusted to 7.0 with an aqueous ammonia solution when preparing Ag-$BiVO_4$, and Pt was allowed to be supported on the prepared $TiO_2$-Ag-$BiVO_4$. Then, the methanol decomposition activity and water splitting activity were evaluated.

Example 3

$SrTiO_3$-Ag-$BiVO_4$ was prepared by the same operation as in Example 1 except that $SrTiO_3$ was used as the hydrogen-evolution photocatalyst, and Pt was allowed to be deposited on the prepared $SrTiO_3$-Ag-$BiVO_4$. Then, the methanol decomposition activity and water splitting activity were evaluated. In a glass container, 30 mg of Ag-$BiVO_4$ was placed and dispersed in 10 mL of a 50 mmol/L potassium phosphate buffer (pH 6.0), 50 μL of MYDOL 10 (manufactured by Kao Corporation) and 200 μL of the prepared protein solution were added thereto, followed by mixing for 1 hour with a rotator. After mixing, the precipitate was separated by centrifugation and washed twice with a 50 mmol/L potassium phosphate buffer (pH 6.0). Then, 3 mL of a $SrTiO_3$ dispersion (10 mg/mL) was added to the obtained phosphate buffer dispersion, and the mixture was incubated at 25°C for 24 hours. The precipitate was separated by centrifugation. Thereafter, an operation (washing operation) of adding deionized water to the precipitate to suspend the precipitate and separating the precipitate from the obtained suspension by centrifugation was performed twice. The obtained precipitate was dried to obtain a brown powder of $SrTiO_3$-Ag-$BiVO_4$.

Comparative Example 1

$TiO_3$-Ag-$BiVO_4$ was prepared by the same operation as in Example 1 except that 0.4 mL of a 250 mmol/L aqueous sodium hydroxide solution was placed in a glass container instead of light irradiation when preparing Ag-BiVO$_4$, and Pt was allowed to be supported on the prepared TiO$_2$-Ag-BiVO$_4$. Then, the methanol decomposition activity and water splitting activity were evaluated. The results are shown in Table 1.

[Table 1]

| | | Example 1 | Example 2 | Example 3 | Comparative Example 1 |
|---|---|---|---|---|---|
| Hydrogen-evolution photocatalyst | | Pt/TiO$_2$ | Pt/TiO$_2$ | Pt/ SrTiO$_3$ | Pt/TiO$_2$ |
| Oxygen-evolution photocatalyst | | BiVO$_4$ | BiVO$_4$ | BiVO$_4$ | BiVO$_4$ |
| Solid mediator | | Ag | Ag | Ag | Ag |
| Electrons collecting surface of oxygen-evolution photocatalyst | | {010} | {010} | {010} | {010} |
| Heterojunction selectivity (a) of solid mediator to electrons collecting surface | (%) | 73. 6 | 61.3 | 73.6 | 45.2 |
| Heterojunction selectivity (b) of hydrogen-evolution photocatalyst to solid mediator on electrons collecting surface | (%) | 73.8 | 62.3 | 65.7 | 45.4 |
| (a) × (b)/10000 | - | 0.54 | 0.38 | 0.48 | 0.2 |
| Selective joining agent | | Protein | Protein | Protein | Protein |
| Methanol decomposition activity (hydrogen evolution rate) | ($\mu$mol·h$^{-1}$·g$^{-1}$) | 8.95 | 4.11 | 7.55 | 0 |
| Water splitting activity (hydrogen evolution rate) | ($\mu$mol·h$^{-1}$·g$^{-1}$) | 0.90 | 0.14 | 0.19 | 0 |

Table 1 shows that the heterojunction photocatalysts of Examples 1 to 3, in which the heterojunction selectivity of the solid mediator to the electrons collecting surface of the oxygen-evolution photocatalyst is 73.6%, 61.3%, and 73.6%, are superior in photocatalytic activity to the heterojunction photocatalyst of Comparative Example 1 in which the heterojunction selectivity is 45.2%. Table 1 also shows that the heterojunction photocatalyst of Comparative Example 1, in which the heterojunction selectivity is 45.2%, has no photocatalytic activity.

INDUSTRIAL APPLICABILITY

The heterojunction photocatalyst and the photocatalyst composite of the present invention are useful as a photocatalyst used for water splitting or organic substance decomposition.

**Claims**

1.   A heterojunction photocatalyst comprising a solid mediator between a hydrogen-evolution photocatalyst and an oxygen-evolution photocatalyst, wherein the solid mediator is selectively joined to an electrons collecting surface of the oxygen-evolution photocatalyst.

2.   The heterojunction photocatalyst according to claim 1, wherein the hydrogen-evolution photocatalyst is selectively joined to the solid mediator.

3.   The heterojunction photocatalyst according to claim 1 or 2, wherein a heterojunction selectivity of the solid mediator to the electrons collecting surface of the oxygen-evolution photocatalyst, calculated by a following formula, is 60% or more:

heterojunction selectivity (a) (%) of solid mediator = {(average value of abundance ratio of solid mediator

joined to electrons collecting surface of oxygen-evolution photocatalyst) × 100}/{(average value of abundance ratio of

solid mediator joined to electrons collecting surface of oxygen-evolution photocatalyst) + (average value of abundance ratio of solid mediator joined to each surface

other than electrons collecting surface of oxygen-evolution

photocatalyst)}.

4. The heterojunction photocatalyst according to any one of claims 1 to 3, wherein a heterojunction selectivity of the hydrogen-evolution photocatalyst to the solid mediator, calculated by a following formula, is 60% or more:

heterojunction selectivity (b) (%) of hydrogen-

evolution photocatalyst = {(average value of abundance

ratio of hydrogen-evolution photocatalyst joined to solid

mediator joined to electrons collecting surface of oxygen-evolution photocatalyst) × 100}/{(average value of

abundance ratio of hydrogen-evolution photocatalyst joined

to solid mediator joined to each surface of oxygen-

evolution photocatalyst) + (average value of abundance

ratio of hydrogen-evolution photocatalyst joined to each

surface of oxygen-evolution photocatalyst and not joined to

solid mediator)}.

5. The heterojunction photocatalyst according to claim 4, wherein a following formula is satisfied:

{heterojunction selectivity (a) (%) of the solid

mediator × heterojunction selectivity (b) (%) of the hydrogen-evolution photocatalyst}/10,000 ≥ 0.3.

6. The heterojunction photocatalyst according to any one of claims 1 to 5, wherein an atomic ratio of a metal contained in the solid mediator to a metal contained in the oxygen-evolution photocatalyst is 1/99 or more and 30/70 or less.

7. The heterojunction photocatalyst according to any one of claims 1 to 6, wherein the hydrogen-evolution photocatalyst is a metal oxide.

8. The heterojunction photocatalyst according to any one of claims 1 to 7, wherein the oxygen-evolution photocatalyst is a metal oxide.

9. The heterojunction photocatalyst according to any one of claims 1 to 8, wherein the solid mediator is a transition metal compound.

10. The heterojunction photocatalyst according to any one of claims 1 to 9, wherein the heterojunction photocatalyst is used for water splitting or organic substance decomposition.

11. The heterojunction photocatalyst according to any one of claims 1 to 10, comprising a protein having a peptide aptamer as a selective joining agent between the hydrogen-evolution photocatalyst and the solid mediator.

12. A photocatalyst composite comprising the heterojunction photocatalyst according to any one of claims 1 to 9 on a substrate.

13. A method for producing the heterojunction photocatalyst according to any one of claims 1 to 11, wherein a protein having a peptide aptamer is used as a selective joining agent when the hydrogen-evolution photocatalyst and the solid mediator are joined.

14. Use of the heterojunction photocatalyst according to any one of claims 1 to 11 as a photocatalyst for water splitting or a photocatalyst for organic substance decomposition.

15. A method for producing hydrogen, comprising irradiating the heterojunction photocatalyst according to any one of claims 1 to 11 or the photocatalyst composite according to claim 12 with light in a presence of water or alcohol.

## Fig.1

## Fig.2

xL ladder marker

TiBP-DPS-AgBP

Fig.3

<table>
<tr><td colspan="2" align="center">**INTERNATIONAL SEARCH REPORT**</td><td>International application No.<br><br>**PCT/JP2021/031469**</td></tr>
</table>

| A. | CLASSIFICATION OF SUBJECT MATTER |
|---|---|

*B01J 35/02*(2006.01)i; *C01B 3/04*(2006.01)i; *B01J 23/68*(2006.01)i
FI:   B01J35/02 J; B01J23/68 M; C01B3/04 A

According to International Patent Classification (IPC) or to both national classification and IPC

| B. | FIELDS SEARCHED |
|---|---|

Minimum documentation searched (classification system followed by classification symbols)

B01J21/00-38/74; C01B3/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

Scopus; JSTPlus (JDreamIII); JST7580 (JDreamIII); JSTChina (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | TAKASHIMA, Toshihiro et al. Visible-light-induced water splitting on a hierarchically constructed Z-scheme photocatalyst composed of zinc rhodium oxide and bismuth vanadate. J. Mater. Chem. A, 23 May 2019, vol. 7, no. 17, pp. 10372-10378, DOI: 10.1039/c8ta12316k abstract, last paragraph of Introduction, entire text of Synthesis of Experimental, entire text of Electron microscopy observation of Results, entire text of Water splitting, first paragraph of Reaction mechanism of the Z-scheme composite, fig. 2, 6 | 1-10, 14, 15 |
| Y | | 12 |
| A | | 11, 13 |
| X | JP 2017-124394 A (TOTO LTD.) 20 July 2017 (2017-07-20) claims 1, 8, 9, 18, paragraphs [0017]-[0056], [0125], [0126], [0129]-[0134], [0139], [0161]-[0165], [0174]-[0178], table 1, fig. 1, 2 | 1-10, 12, 14, 15 |
| Y | | 12 |
| A | JP 2015-217373 A (YAMANASHI UNIVERSITY) 07 December 2015 (2015-12-07) entire text | 1-15 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 October 2021** | **26 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2021/031469** |

**C.    DOCUMENTS CONSIDERED TO BE RELEVANT**

| Category* | Citation of document, with indication, where appropriate, of the relevant passages | Relevant to claim No. |
|---|---|---|
| A | CN 104826627 A (INSTITUTE OF OCEANOLOGY, CHINESE ACADEMY OF SCIENCES) 12 August 2015 (2015-08-12)<br>entire text | 1-15 |

Form PCT/ISA/210 (second sheet) (January 2015)

INTERNATIONAL SEARCH REPORT
Information on patent family members

International application No.

**PCT/JP2021/031469**

| Patent document cited in search report | | | Publication date (day/month/year) | Patent family member(s) | Publication date (day/month/year) |
|---|---|---|---|---|---|
| JP | 2017-124394 | A | 20 July 2017 | US 2018/0214858 A1 claims 1, 9, 10, paragraphs [0054]-[0111], [0197]-[0200], [0208]-[0217], [0230], [0264]-[0270], [0286]-[0288], table 1, fig. 1, 2 WO 2017/022671 A1 JP 6073520 B1 | |
| JP | 2015-217373 | A | 07 December 2015 | (Family: none) | |
| CN | 104826627 | A | 12 August 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017124394 A

**Non-patent literature cited in the description**

- **TOSHIHIRO TAKASHIMA et al.** *J. Mater. Chem. A,* 2019, vol. 7, 10372-10378